# EUROPEAN PATENT SPECIFICATION

(11) **EP 3 078 856 B1**
(45) Date of publication and mention of the grant of the patent: **27.01.2021**
(21) Application number: 14868590.2
(22) Date of filing: 20.11.2014
(51) Int. Cl.: F04B 43/08, F16J 3/06, F04B 45/02, F15B 1/10, F16J 3/04, F04B 43/00, F04B 43/10, F04B 43/113, F04B 53/16

(54) **FLUID MACHINE**
STRÖMUNGSMASCHINE
MACHINE À FLUIDE

(30) Priority: 05.12.2013 JP 2013252114
(43) Date of publication of application: 12.10.2016
(73) Proprietor: NIPPON PILLAR PACKING CO., LTD., Nishi-ku Osaka-shi, Osaka 550-0013 (JP)
(72) Inventor: FUJII Tatsuya, Osaka-shi Osaka 532-0022 (JP); FUJII Makoto, Osaka-shi Osaka 532-0022 (JP); MIYAMOTO Masaki, Osaka-shi Osaka 532-0022 (JP); YAMADA Masateru, Osaka-shi Osaka 532-0022 (JP); MAKIHATA Shintaro, Osaka-shi Osaka 532-0022 (JP); ADACHI Tomohiro, Osaka-shi Osaka 532-0022 (JP); SHIOMI Masaya, Osaka-shi Osaka 532-0022 (JP); YAMAZAKI Kenji, Osaka-shi Osaka 532-0022 (JP)
(74) Representative: Fleuchaus, Michael A.
(86) International application number: PCT/JP2014/080761
(87) International publication number: WO 2015/083553

(56) References cited:
- JP-A- 2001 193 836
- JP-A- 2001 193 836
- JP-A- 2001 193 837
- JP-A- 2003 239 865

## Description

### Technical Field

The present invention relates to a fluid apparatus including a bellows.

### BACKGROUND ART

As a fluid apparatus including a bellows which is configured to be extendable and contractible in the axial direction in order to allow a fluid to flow, a bellows pump, a pulsation damping device, and the like are known (for example, see Patent Literature 1).

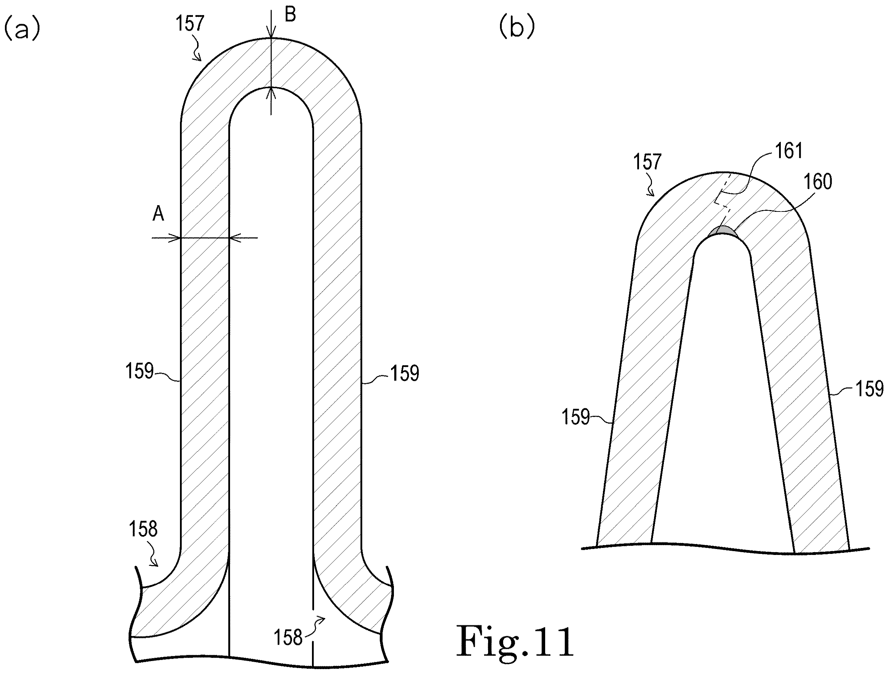

In a fluid apparatus of this kind, as shown in Fig. 11(a), a bellows has peak portions 157 and valley portions 158 which are alternately formed in the axial direction, and annular side surface portions 159 which are located between the peak portions 157 and the valley portions 158, and which connect the both portions to each other. The bellows is configured so as to, when the fluid apparatus operates, extendable and contractible in the axial direction.

When the thickness of each of the side surface portions 159 in the axial direction is indicated by A, and that of each of the axial middle parts (apex portions) of the peak portions 157 in a direction which is perpendicular to the axial direction is indicated by B, the bellows are set so that a ratio B/A is 1. That is, the thickness A of the side surface portions and the thickness B of the peak portions are equal to each other.

When the bellows is extended, therefore, the peak portion 157 is preferentially deformed to be stretched in the axial direction as shown in Fig. 11(b), and large stress is concentrically generated in a specific narrow place 160 which is in the inner side of the axial middle part of the peak portion 157, and the axial middle part of the peak portion 157 easily fatigues. As a result, there arises a possibility that a crack 161 which extends in a direction perpendicular to the axial direction occurs in the axial middle part of the peak portion 157 where stress concentration occurs.

### Prior Art Literature

### Patent Literature

Patent Literature 1: Japanese Patent Application Laid-Open No. 6-50265

The document JP 2001 193836 discloses a bellow pump which bellow, in the cross-sectional view, provides peak portions, valleys and side surface portions, whereby the ratio of the thickness in the peak portion and the thickness of the side surface portion is between 1.2 and 2.5.

### Summary of the Invention

### Problem to be Solved by the Invention

The inventors have thought that, the larger the thickness B of the middle part with respect to the thickness A of the side surface portion in order to prevent the crack 161 from occurring, the higher the rigidity of the middle part, and the crack 161 can be prevented from occurring. Even when the rigidity is enhanced, however, the stress concentration in the middle does not disappear. Therefore, there is a fear that, when the bellows is used for a long term, a crack may occur in the middle part because of fatigue.

When the inventors have repeated a process of trial and error in order to prevent a crack due to fatigue from occurring, the inventors have found that, when the ratio B/A of the thickness B of the peak portion in a direction which is perpendicular to the axial direction, to the thickness A of the side surface portion in the axial direction is limitedly set within a certain range, stress concentration in the middle part is remarkably reduced, and occurrence of a crack such as above described can be suppressed. The invention has been accomplished based on this finding.

The invention has bee conducted in view of the above circumstances. It is an object of the invention to provide a fluid apparatus in which a crack due to extension and contraction of a bellows can be suppressed from occurring in an axial middle part of a peak portion of the bellows.

### Means for Solving the Problem

The invention of claim 1 is a fluid apparatus including a bellows which is configured to be extendable and contractible in an axial direction in order to suck a fluid from a suction flow passage and eject the fluid to an ejection flow passage, wherein the bellows has: peak portions and valley portions which are alternately formed in the axial direction; and annular side surface portions which are located between the peak portions and the valley portions, and which connect the both portions to each other, and a ratio B/A of a thickness B of the axial middle part of each of the peak portions in a direction which is perpendicular to the axial direction, to a thickness A of each of the side surface portions in the axial direction is set within a range of 1.3 to 1.8.

According to the configuration, when the bellows is extended, large stress dispersedly occurs on the side of the inner circumferential surface of each of the peak portions which are stretched in the axial direction. Namely, large stress which is caused in the peak portion in this case is not concentrated in a specific narrow place. Therefore, the axial middle part of the peak portion which is deformable in accordance with extension and contraction of the bellows can be made not easily fatigued. Consequently, a crack which is due to extension and contraction of the bellows, and which extends in a direction perpendicular to the axial direction can be suppressed from occurring in the axial middle part of the peak portion. As a result, the bellows is hardly broken, and a prolonged life period of the bellows can be realized.

The invention of claim 2 has a configuration where, in the fluid apparatus set forth in claim 1, the ratio B/A of the thickness B of the axial middle part of each of the peak portions in the direction which is perpendicular to the axial direction, to the thickness A of each of the side surface portions in the axial direction is set within a range of 1.3 to 1.5.

According to the configuration, even in the case of severe use conditions such as those where the temperature of the fluid is higher than the ordinary temperature (room temperature), when the bellows is extended in the axial direction, large stress which is caused in the peak portion is not concentrated in a specific narrow place. Even in such a case, therefore, a crack which is due to extension and contraction of the bellows can be suppressed from occurring in the axial middle part of the peak portion of the bellows. A prolonged life period of the bellows can be realized.

The invention of claim 3 has a configuration where, in the fluid apparatus set forth in claim 1 or 2, when the bellows is maximally contracted in the axial direction, each of side surface portions is located in a plane which is substantially perpendicular to the axial direction of the bellows.

### Effects of the Invention

According to the invention, it is possible to provide a fluid apparatus in which a crack due to extension and contraction of a bellows can be suppressed from occurring in an axial middle part of a peak portion of the bellows.

### Brief Description of the Drawings

Fig. 1 is a side sectional view of a pump device which is a fluid apparatus of an embodiment of the invention.
Fig. 2 is a partial enlarged sectional view of a bellows in the pump device.
Fig. 3 is a partial enlarged sectional view of a bellows portion of the bellows.
Fig. 4 is a comparison view of the maximum value of stress which, in the case where the temperature of a fluid is 20°C, occurs in a peak portion when the bellows is extended.
Fig. 5 is a comparison view of the maximum value of stress which, in the case where the temperature of the fluid is 70°C, occurs in a peak portion when the bellows is extended.
Fig. 6 is a partial enlarged sectional view of a modification of the bellows portion of the bellows.
Fig. 7 is another partial enlarged sectional view of the bellows in the pump device.
Fig. 8 is a partial enlarged sectional view of a bellows in another example.
Fig. 9 is a side sectional view of a pulsation damping device which is a fluid apparatus of another embodiment of the invention.
Fig. 10 is a side sectional view of a bellows pump which is a fluid apparatus of a further embodiment of the invention.
Fig. 11 is a partial enlarged sectional view of a bellows in a fluid apparatus of a conventional example. Best Mode for Carrying Out the Invention

Preferred embodiments of the invention will be described with reference to the drawings.

The fluid apparatus of the invention is a bellows pump, a pulsation damping device, or the like, and, for example, used for transporting a fluid such as ultrapure water or chemical liquid in a facility for producing a semiconductor or liquid crystal.

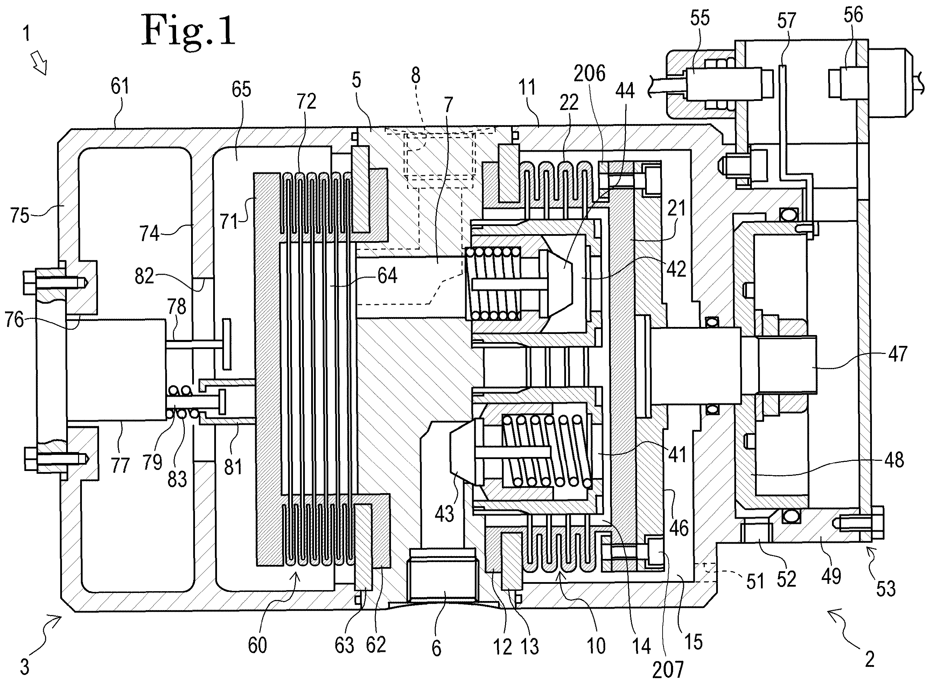

Fig. 1 is a side sectional view of a pump device 1 which is a fluid apparatus of an embodiment of the invention.

As shown in Fig. 1, the pump device 1 includes a bellows pump 2, and a pulsation damping device 3 which is juxtaposed to the bellows pump 2. The bellows pump 2 and the pulsation damping device 3 have a common partition wall 5, and are placed coaxially with each other. In the partition wall 5, a suction flow passage 6, intermediate flow passage 7, and ejection flow passage 8 for a fluid are formed.

The bellows pump 2 includes the bellows 10. The bellows 10 is configured so as to be extendable and contractible in the axial direction (the lateral direction in Fig. 1) in order to suck the fluid from the suction flow passage 6 and eject the fluid to the intermediate flow passage 7 which functions as an ejection flow passage. In the embodiment, a bottomed cylinder-like pump casing 11 is attached to a side wall portion of the partition wall 5 on one axial end side (the right side in Fig. 1), and the bellows 10 is placed in the pump casing 11.

The bellows 10 is configured by a fluorine resin (in the embodiment, polytetrafluoroethylene (PTFE)). The bellows 10 is formed by cutting a cylindrical member made of polytetrafluoroethylene on a lathe by using a stick bite or a knife.

The bellows 10 has an opening peripheral edge portion 12 on the other axial end side (the left side in Fig. 1). The opening peripheral edge portion 12 is fixed in an airtight state to a side wall portion of the partition wall 5 on the one axial end side by a first annular fixing plate 13. In this way, the internal space of the pump casing 11 is hermetically partitioned by using the bellows into a pump working chamber 14 which is located inside the bellows 10, and a pump operating chamber 15 which is located outside the bellows 10.

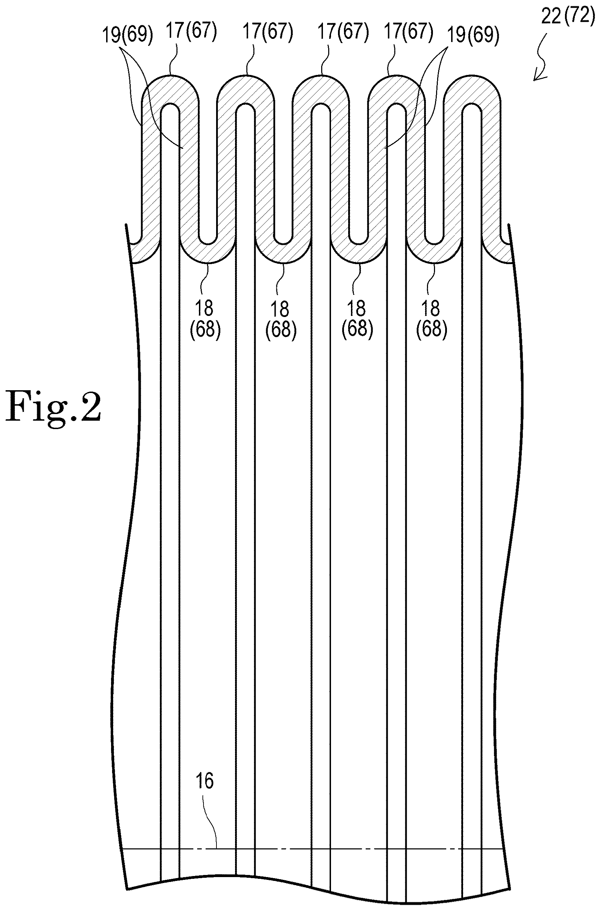

The bellows 10 further has a closed end portion 21 on the one axial end side (the right side in Fig. 1). The bellows 10 has a cylindrical bellows portion 22 between the closed end portion 21 and the opening peripheral edge portion 12 so as to be extendable and contractible in the axial direction. In the bellows portion 22, peak portions 17, valley portions 18, and side surface portions 19, which will be described later, are provided (see Fig. 2).

In the bellows pump 2, moreover, a suction port 41 and discharge port 42 for a fluid communicate with the interior of the pump working chamber 14. The suction port 41 communicates with the suction flow passage 6, and the discharge port 42 communicates with the intermediate flow passage 7. A first check valve 43 and second check valve 44 which can be alternately opened and closed in accordance with extending and contracting operations of the bellows 10, and which are of the resin-made spring type are disposed in the middles of the suction flow passage 6 and the intermediate flow passage 7.

A coupling member 46 is disposed in the pump operating chamber 15. The coupling member 46 is fixed to the closed end portion 21 of the bellows 10 by using a second annular fixing plate 206 and bolts 207. A shaft member 47 is coupled to the coupling member 46. The shaft member 47 is disposed so as to be passed from the interior of the pump operating chamber 15 through a substantially middle of a bottom wall portion of the pump casing 11 to be projected to the outside. A piston 48 is fixed to a projected portion of the shaft member 47.

The piston 48 is fitted into a cylinder 49 fixed to the bottom wall portion of the pump casing 11, in an axially slidable manner. An air cylinder 53 which is driving means for extending and contracting the bellows 10 is configured so as to be able to alternately supply pressurized air from an air compressor or the like which is not shown, to the pump operating chamber 15 and the internal space surrounded by the cylinder 49 and the piston 48 through air holes 51, 52 that are formed in the bottom wall portion of the pump casing 11, and the cylinder 49, respectively.

Proximity sensors 55, 56 are attached to the air cylinder 53, and a sensor sensing plate 57 is attached to the piston 48. In accordance with the axial reciprocal motion of the piston 48, the sensor sensing plate 57 alternately approaches the proximity sensors 55, 56, whereby the supply of the pressurized air which is fed from the air compressor or the like, into the internal space of the cylinder 49, and that into the pump operating chamber 15 are automatically switched over.

As shown in Fig. 1, the pulsation damping device 3 further includes a bellows 60. The bellows 60 is configured so as to be extendable and contractible in the axial direction (the lateral direction in Fig. 1) in order to suck a fluid from the intermediate flow passage 7 which functions as a suction flow passage, and eject the fluid to the ejection flow passage 8. In the embodiment, a bottomed cylinder-like casing 61 is attached to a side wall portion of the partition wall 5 on the other axial end side (the left side in Fig. 1), and the bellows 60 is placed in the casing 61.

The bellows 60 has an opening peripheral edge portion 62 on the one axial end side (the right side in Fig. 1) . The opening peripheral edge portion 62 is fixed in an airtight state to a side wall portion of the partition wall 5 on the other axial end side by an annular fixing plate 63.

In this way, the internal space of the casing 61 is hermetically partitioned by using the bellows 60 into a liquid chamber 64 which is located inside the bellows 60, and an air chamber 65 which is located outside the bellows 60.

The bellows 60 further has a closed end portion 71 on the other axial end side. The bellows 60 has a cylindrical bellows portion 72 between the closed end portion 71 and the opening peripheral edge portion 62 so as to be extendable and contractible in the axial direction. In the bellows portion 72, peak portions 67, valley portions 68, and side surface portions 69 are provided (see Fig. 2).

In the pulsation damping device 3, moreover, the intermediate flow passage 7 and the ejection flow passage 8 communicate with the interior of the liquid chamber 64. A stopper wall 74 for restricting excessive extension of the bellows 60 which may be possibly caused by an unexpected situation is disposed at a position opposed to the closed end portion 71 of the bellows 60, with forming a predetermined gap with respect to the closed end portion 71.

A bottom wall portion 75 is disposed on the other axial end side with respect to the stopper wall 74 of the casing 61. In the bottom wall portion 75, an opening 76 is formed, and automatic ventilation adjusting means 77 for adjusting the filling pressure of the interior of the air chamber 65 is detachably attached by bolts or the like to the bottom wall portion in a state where the means is inserted into the opening 76.

The automatic ventilation adjusting means 77 is configured so as to balance the liquid pressure in the liquid chamber 64 with the air pressure in the air chamber 65 in order to prevent excessive extending and contracting deformation from occurring in the bellows 60. Specifically, when the capacity of the liquid chamber 64 is increased to exceed a predetermined range, the automatic ventilation adjusting means 77 causes the air to be sucked into the air chamber 65 to raise the filling pressure, and, when the capacity of the liquid chamber 64 is decreased to exceed a predetermined range, the means discharges the air from the air chamber 65 to lower the filling pressure.

A valve push rod 78 for opening and closing a suction valve (not shown) disposed in the automatic ventilation adjusting means 77, and a slider 81 attached to a tip end of a valve pull rod 79 for opening and closing a discharge valve (not shown) are disposed so as to face the interior of the air chamber 65 through a through hole 82 which is formed in the stopper wall 74. The slider 81 is always urged by a spring 83 toward the bellows 60.

Next, the operation of the pump device 1 (the bellows pump 2 and the pulsation damping device 3) will be described.

In actuation of the pump device 1, in the bellows pump 2, when the pressurized air from the air compressor or the like is supplied through the air hole 52 to the internal space surrounded by the cylinder 49 and the piston 48, the bellows 10 is extended in the rightward direction in Fig. 1 to cause the pump working chamber 14 to have a negative pressure. In accordance with the extension of the bellows 10, the first check valve 43 on the side of the suction port 41 is opened, and the fluid fed from the suction flow passage 6 is sucked into the pump working chamber 14 through the first check valve 43.

By contrast, when the pressurized air which is fed from the air compressor or the like is supplied through the air hole 51 into the pump operating chamber 15, the bellows 10 is contracted in the leftward direction in Fig. 1. In accordance with the contraction of the bellows 10, the second check valve 44 on the side of the discharge port 42 is opened, and the fluid which is sucked into the pump working chamber 14 is ejected toward the intermediate flow passage 7 from the second check valve 44.

As described above, when the bellows 10 is extended and contracted by the operation of the air cylinder 53, the first check valve 43 and second check valve 44 in the pump working chamber 14 are alternately opened and closed, and the operation of sucking the fluid from the suction flow passage 6 into the pump working chamber 14, and that of discharging the fluid from the pump working chamber 14 into the intermediate flow passage 7 are repeated. In this way, the pumping operation of the bellows pump 2 is executed.

During execution of the pumping operation, the pressurized air is adequately controlled so that the pressure (external pressure) of the pressurized air of the pump operating chamber 15 which acts on the bellows portion 22 of the bellows 10 is always maintained to be higher than the pressure (internal pressure) of the fluid of the pump working chamber 14 which acts on the bellows portion 22.

The fluid ejected from the discharge port 42 of the bellows pump 2 is formed into a pulsating flow by the extending and contracting operations of the bellows pump 2, and then fed through the intermediate flow passage 7 into the liquid chamber 64 which is formed in the bellows 60 of the pulsation damping device 3. After the fluid is temporarily stored in the liquid chamber 64, the fluid is ejected to the outside from the ejection flow passage 8.

In this case, when the ejection pressure of the fluid has an increasing tendency, the bellows 60 of the pulsation damping device 3 is extended, and the capacity of the liquid chamber 64 is increased to absorb the ejection pressure. At this time, the liquid amount of the fluid which is flown out from the liquid chamber 64 is smaller than that elected from the bellows pump 2.

When, in this state, the ejection pressure of the fluid is changed to a decreasing tendency, the pressure of the fluid is lower than the filling pressure of the interior of the air chamber 65 which is compressed by the extension of the bellows 60, and therefore the bellows 60 is contracted to decrease the capacity of the liquid chamber 64. At this time, the liquid amount of the fluid which is flown out from the liquid chamber 64 is larger than that elected from the bellows pump 2.

By the above-described repeated operation of changing the capacity of the liquid chamber 64 which is caused by the extending and contracting operations of the bellows 60, the fluid is caused to be continuously and smoothly flown out from the pulsation damping device 3 while the pulsation is damped.

When the capacity of the liquid chamber 64 of the pulsation damping device 3 is increased to exceed a predetermined range by the extending and contracting operations of the bellows 60, specifically, by the variation of the ejection pressure in the bellows pump 2, the closed end portion 71 of the bellows 60 butts against the valve push rod 78 of the automatic ventilation adjusting means 77, and then pushes the valve push rod 78 in the leftward direction in Fig. 1. Therefore, the suction valve is opened, the air is sucked into the air chamber 65, the filling pressure is raised, and excessive extending deformation of the bellows 60 is suppressed. Consequently, the capacity of the liquid chamber 64 is prevented from being excessively increased.

By contrast, when the capacity of the liquid chamber 20a is decreased to exceed a predetermined range, the slider 81 is engaged with the tip end of the valve pull rod 79, and the valve pull rod 79 is rightwardly pushed by the spring 83. Therefore, the discharge valve is opened, the air is discharged from the interior of the air chamber 65, the filling pressure is lowered, and excessive contracting deformation of the bellows 60 is suppressed. Consequently, the capacity of the liquid chamber 64 is prevented from being excessively decreased.

In this way, the amounts of extending and contracting deformations of the bellows 60 can be restricted within a constant range irrespective of variation of the ejection pressure of of the bellows pump 2, and pulsation can be reduced.

Next, the bellows 10 of the bellows pump 2 will be described in more detail. The bellows 60 of the pulsation damping device 3 is configured in a substantially same manner as the bellows 10, and hence its description is omitted.

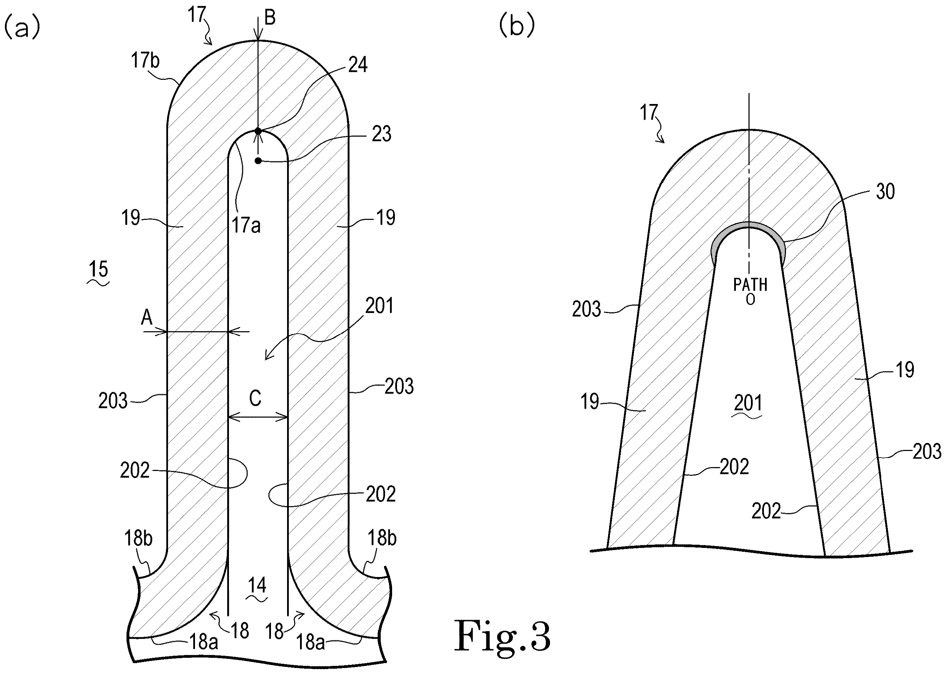

Fig. 2 is a partial enlarged sectional view of the bellows 10(60) in the pump device 1. Fig. 3(a) is a partial enlarged sectional view of the bellows portion 22 when the bellows 10 is contracted. Fig. 3(b) is a partial enlarged sectional view of the bellows portion 22 when the bellows 10 is maximally extended.

As shown in Fig. 2, the bellows 10 has the peak portions 17 and valley portions 18 which are alternately formed in the direction of the axis 16 (the lateral direction in Fig. 1), and the annular side surface portions 19 which are located between the peak portions 17 and the valley portions 18, and which connect the both portions to each other. Each of the peak portions 17 is provided in an outer circumferential surface portion of the bellows 10 (the bellows portion 22), and each of the valley portions 18 is placed at a position which is closer to the axis 16 than the peak portion 17. The side surface portions 19 which are adjacent to each other in the direction of the axis 16 are placed to be opposed to each other.

In the bellows 10, as shown in Fig. 3 (a), when the thickness of the side surface portions 19 in the direction of the axis 16 (the lateral direction in Fig. 1) is indicated by A, and that of the axial middle parts (an apex portion, the position of a path 0 which will be described later) of the peak portions 17 in a direction (radial direction) which is perpendicular to the direction of the axis 16 is indicated by B, a ratio B/A of the thicknesses is set within a range of 1.3 to 1.8. In the embodiment, the thickness A of the side surface portions 19 is set to be uniform in a direction which is perpendicular to the direction of the axis 16.

According to the configuration, during extension of the bellows 10 due to the operation the pump device 1, in the inner circumferential surface side 17a of the peak portion 17 which is extended in the direction of the axis 16 as shown in Fig. 3(b), large stress (maximum value) dispersedly occurs in a range 30 which extends along the inner circumferential surface across the middle portion in the direction of the axis 16. Namely, large stress which is caused in the peak portion 17 is not concentrated in a specific narrow place. This function effect will be described in Paragraphs Nos. [0054] to [0059]. In the case where the thickness ratio B/A is 1, stress is concentrated in a focused manner in the inner circumferential surface side of the axial middle portion of the peak portion which is extended in the axial direction (see the reference numeral 160 in Fig. 11).

Therefore, the middle part in the direction of the axis 16 of the peak portion 17 which is deformable in accordance with extension and contraction of the bellows 10 can be made not easily fatigued. Consequently, a crack which is due to extension and contraction of the bellows 10, and which extends in a direction perpendicular to the direction of the axis 16 can be suppressed from occurring in the middle part in the direction of the axis 16 of the peak portion 17. As a result, the bellows 10 is hardly broken, and a prolonged life period of the bellows can be realized.

More preferably, the ratio B/A of the thickness B of the middle part in the direction of the axis 16 of each of peak portions 17 in the direction which is perpendicular to the direction of the axis 16, to the thickness A of each of side surface portions 19 in the direction of the axis 16 is set within a range of 1.3 to 1.5, and, further preferably, the ratio is set to 1.5.

According to the configuration, even in the case of severe use conditions such as those where the temperature of the fluid is higher (for example, 70°C) than the ordinary temperature (room temperature), when the bellows 10 is extended in the direction of the axis 16, large stress which is caused in the peak portion 17 is not concentrated in a specific narrow place. Even in such a case, therefore, a crack which is due to extension and contraction of the bellows 10 can be suppressed from occurring in the middle part in the direction of the axis 16 of the peak portion 17 of the bellows 10.

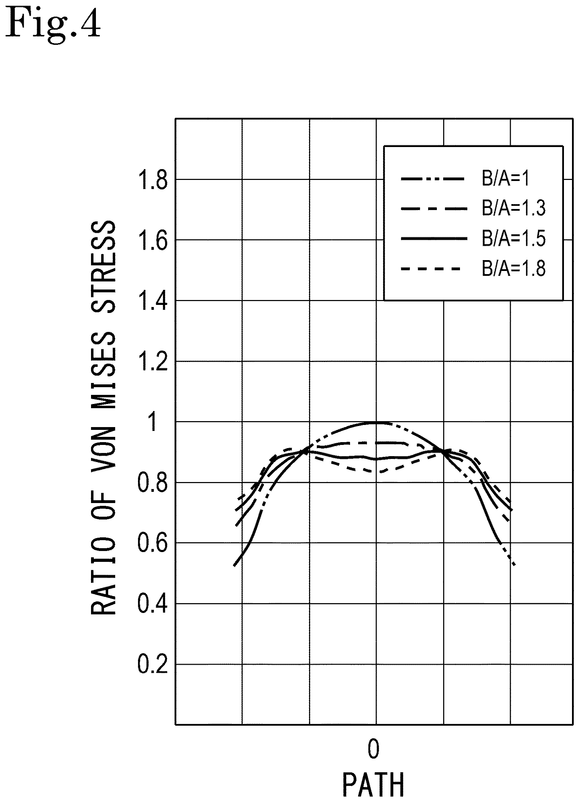

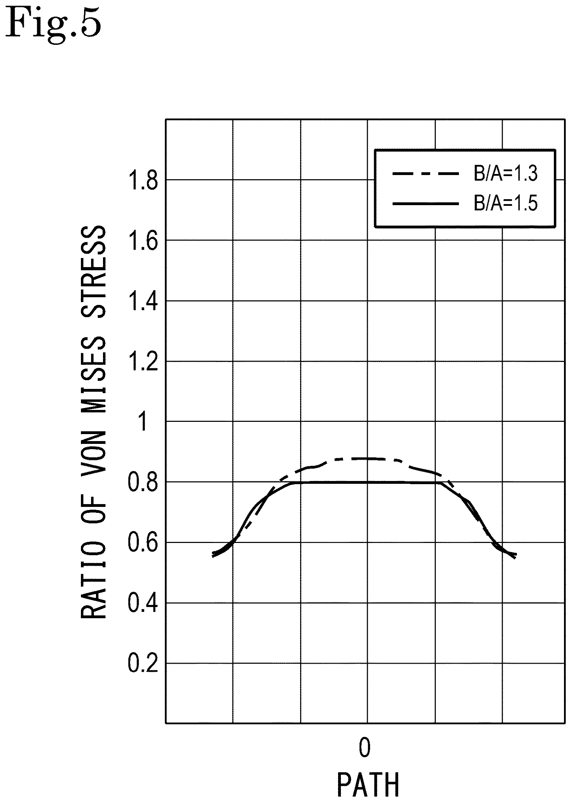

Next, the phenomenon in which the embodiment achieves the function effect that large stress occurring in the peak portion 17 is not concentrated in a specific narrow place will be described. The stress occurring in the peak portion 17 of the bellows 10 was analyzed by calculating the Von Mises stress. Fig. 4 is a comparison view of the maximum value (maximum of Von Mises stress) of stress which, in the case where the temperature of the fluid is 20°C, occurs in the peak portion 17 when the bellows 10 is extended. Fig. 5 is a comparison view of the maximum value (maximum Von Mises stress) of stress which, in the case where the temperature of the fluid is 70°C, occurs in the peak portion 17 when the bellows 10 is extended.

In the case where, among paths which extend from one end in the direction of the axis 16 of the inner circumferential surface side 17a of the peak portion 17 to the other end, the middle portion (apex portion) in the direction of the axis 16 of the peak portion 17 is indicated by a path 0, the maximum value (maximum Von Mises stress) of stress occurring in the peak portion 17 which is stretched in the direction of the axis 16 when the bellows 10 is extended is distributed in the arcuate range 30 that includes the position of the path 0 in the inner circumferential surface side of the peak portion 17.

From Fig. 4, it can be confirmed that, when the largest maximum Von Mises stress at the thickness ratio B/A = 1 is set to 1, the maximum Von Mises stress has the largest value (i.e., 1) in a specific place which is the position of the path 0, while being is steeply changed, but, in the embodiment, the maximum Von Mises stress is reduced to about 0.9 in a predetermined range in the direction of the axis 16 and across the position of the path 0, and the value of about 0.9 is substantially maintained.

From this, it is seen that, in the embodiment, the maximum Von Mises stress has an approximately same value in a relatively wide predetermined range (the flat-like portions in Fig. 4) across the position of the path 0 with respect to the path, at each of thickness ratios B/A = 1.3, 1.5, and 1.8. Namely, it is seen that large stress (maximum value) occurring in the peak portion 17 when the bellows 10 is extended has a relatively small value, and is distributed in the periphery of the position of the path 0 without being concentrated to the position thereof.

From Fig. 5, moreover, it can be confirmed that, when the largest maximum Von Mises stress at the thickness ratio B/A = 1 is set to 1, in the embodiment, the maximum Von Mises stress is reduced to about 0.85 in a predetermined range in the direction of the axis 16 and across the position of the path 0, and the value of about 0.85 is substantially maintained.

From this, it is seen that, even in the case where the temperature of the fluid is high (specifically, 70°C), the maximum Von Mises stress has an approximately same value in a relatively wide predetermined range (the flat-like portions in Fig. 5) across the position of the path 0 with respect to the path, at each of thickness ratios B/A = 1.3 and 1.5. Namely, it is seen that large stress (maximum value) occurring in the peak portion 17 when the bellows 10 is extended has a relatively small value, and is distributed in the periphery of the position of the path 0 without being concentrated to the position thereof.

In the embodiment, as shown in Fig. 3(a), the sectional shape of the inner circumferential surface side 17a of the peak portion 17 in the direction of the axis 16 is formed into an arcuate shape having a first radius of curvature. The sectional shape of the outer circumferential surface side 17b of the peak portion 17 in the direction of the axis 16 is formed into an arcuate shape having a second radius of curvature which is larger than the first radius of curvature. Here, the center 24 of the arc having the second radius of curvature which is placed on the same axis as the center 23 of the arc having the first radius of curvature is deviated toward the radially outer side with respect to the center 23.

In the embodiment, as shown in Figs. 2 and 3, the sectional shape of an outer circumferential surface side 18b of the valley portion 18 in the direction of the axis 16 is formed into a shape (arcuate shape) corresponding to the sectional shape of the inner circumferential surface side 17a of the peak portion 17 in the direction of the axis 16. The sectional shape of an inner circumferential surface side 18a of the valley portion 18 in the direction of the axis 16 is formed into a shape (arcuate shape) corresponding to the sectional shape of the outer circumferential surface side 17b of the peak portion 17 in the direction of the axis 16.

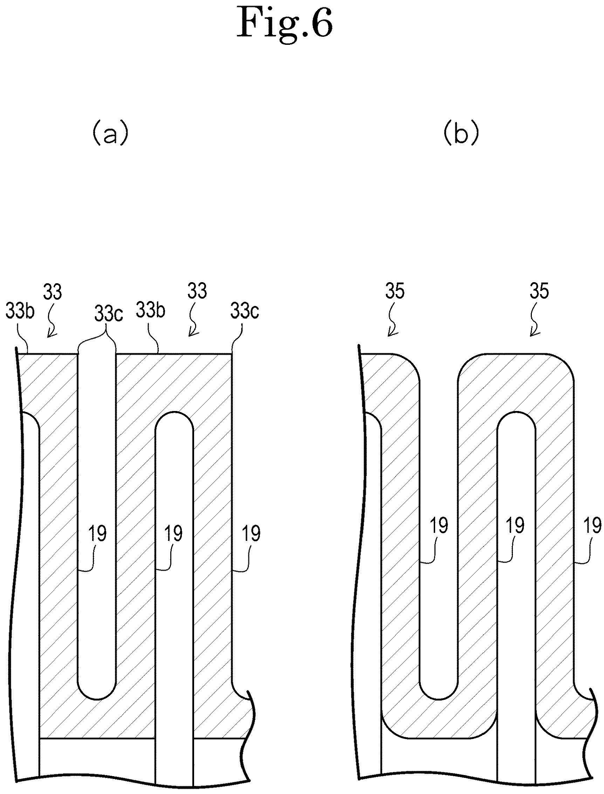

Although, in the embodiment, the peak portion of the bellows in the invention is the peak portion 17 in which a ridge portion of the outer circumferential surface side 17b is formed into an arcuate shape in sectional, the peak portion is not limited to this. As shown in Fig. 6(a), the peak portion may be formed as a peak portion 33 having, in a sectional view, an angular shape in which ridge portions of an outer circumferential surface side 33b are formed into edge portions 33c in the both end sides in the direction of the axis 16, or, as shown in Fig. 6(b), a peak portion 35 in which the edge portions 33c of the peak portion 33 are chamfered. From the viewpoint of relaxation of stress concentration, however, the peak portion of the bellows in the invention is preferably the peak portion 17 shown in Fig. 3 as compared with the peak portions 33, 35 shown in Figs. 6(a) and (b).

In the embodiment, as shown in Fig. 3, a space portion 201 is formed between the side surface portions 19 which are adjacent to each other in the direction of the axis 16. Also when the bellows 10 is contracted, the space portion 201 is held. The width (the width of the space portion in in the direction of the axis 16) C between the side surface portions 19 which are adjacent to each other in the direction of the axis 16 is set to be substantially equal to the thickness A of the side surface portions 19 when the bellows 10 is contracted (maximally contracted).

In the embodiment, the side surface portions 19 are configured so as to, when the bellows 10 is maximally contracted in the axial direction, be located on a plane which is substantially perpendicular to the axial direction of the bellows 10 as shown in Fig. 3(a). The state of the bellows 10 is adequately controlled by the air cylinder 53 so that the space portion 201 having the width C of a predetermined dimension is formed between the side surface portions 19 which are opposed to each other on the side of the pump working chamber 14.

Specifically, the side surface portions 19 of the bellows 10 has an inner circumferential surface 202 which faces toward the pump working chamber 14, and an outer circumferential surface 203 which faces toward the pump operating chamber 15. Each of the inner circumferential surface 202 and the outer circumferential surface 203 is formed into a planar shape. The inner circumferential surface 202 and the outer circumferential surface 203 are placed in parallel to each other so that the thickness A of the side surface portions 19 is substantially constant in a radial direction of the bellows 10.

When the bellows 10 is maximally contracted in the axial direction, then, the inner circumferential surface 202 and the outer circumferential surface 203 are configured to constitute planes which are substantially perpendicular to the axial direction of the bellows 10. When the bellows 10 is maximally contracted, therefore, the space portion 201 has the width C which is approximately equal to the peak portion 17 on the side of the valley portion 18, and namely has the width C which is substantially constant in a radial direction of the bellows 10.

The maximally contracted state of the bellows 10 can be realized by, in the air cylinder 53, contacting the piston 48 which is moved for contracting the bellows 10, to the cylinder 49 (the bottom wall portion of the pump casing 11), thereby restricting the position of the piston 48, or controlling the pressurized air by using the proximity sensors 55, 56 and the sensor sensing plate 57.

In the bellows 10 in the maximally contracted state, therefore, it is possible to, in the pump working chamber 14, ensure the width C which does not impede ingress of the fluid into the space portion 201, and the pump working chamber 14 is easily filled with the fluid. Consequently, the operation of switching the contracted state of the bellows 10 to the extended state in accordance with the inflow of the fluid into the pump working chamber 14 can be smoothly performed.

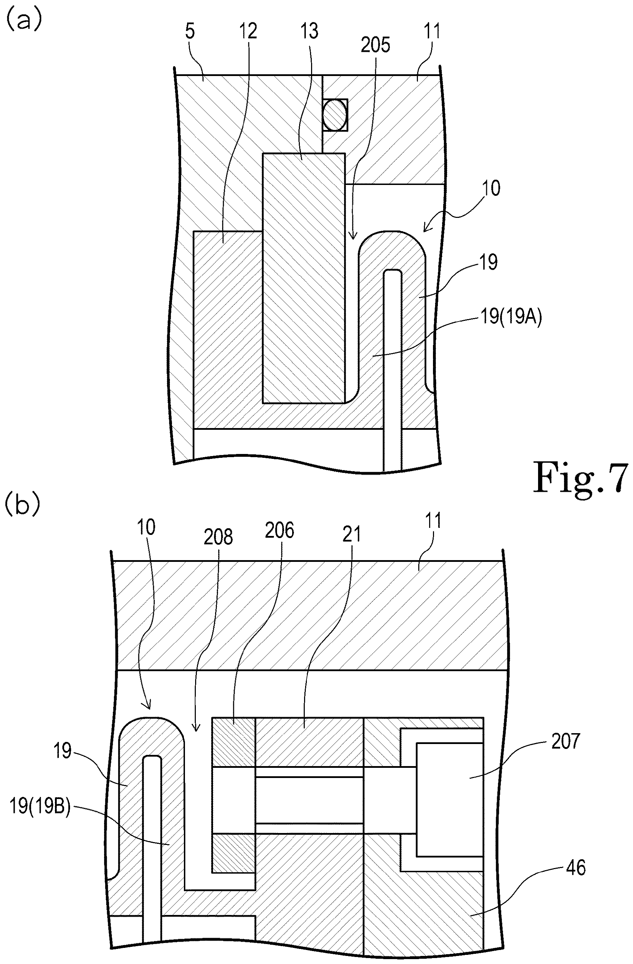

Fig. 7(a) is an enlarged sectional view of a vicinity of the opening peripheral edge portion 12 when the bellows 10 is maximally contracted. Fig. 7(b) is an enlarged sectional view of a vicinity of the closed end portion 21 when the bellows 10 is maximally contracted.

In the embodiment, as shown in Fig. 7(a), the bellows 10 is disposed so that, when the bellows 10 is maximally contracted, the side surface portion 19(19A) which is closest to the opening peripheral edge portion 12 is not contacted with the first annular fixing plate 13. The side surface portion 19(19A) is placed so that, when the bellows 10 is maximally contracted, a first gap 205 is formed between the side surface portion and the first annular fixing plate 13.

In the embodiment, as shown in Fig. 7(b), the bellows 10 is disposed so that, when the bellows 10 is maximally contracted, the side surface portion 19(19B) which is closest to the closed end portion 21 is not contacted with the second annular fixing plate 206. The side surface portion 19(19B) is placed so that, when the bellows 10 is maximally contracted, a second gap 208 is formed between the side surface portion and the second annular fixing plate 206.

According to the configuration, when the bellows 10 is extension-driven, it is possible to block the side surface portion 19(19A) from repeatedly contacting with the first annular fixing plate 13. In this case, furthermore, it is possible to block the side surface portion 19(19B) from repeatedly contacting with the second annular fixing plate 206. Therefore, deterioration of the bellows 10 (the side surface portions 19(19A), (19B)) caused by contact with the first annular fixing plate 13 and the second annular fixing plate 206 can be prevented from occurring.

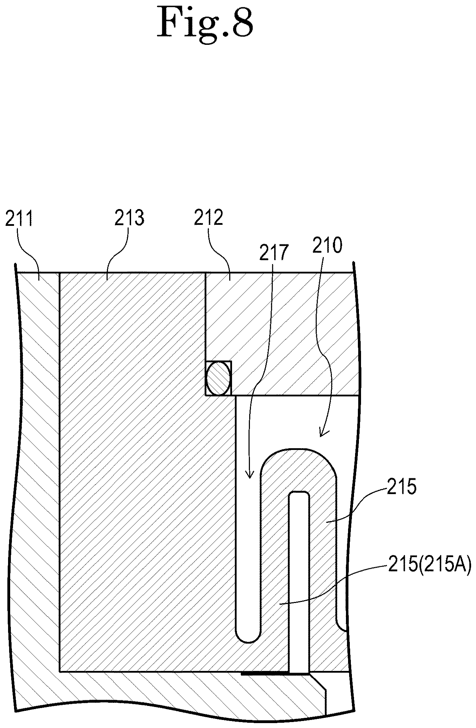

In the fluid apparatus of the invention, a bellows 210 which, as shown in Fig. 8, is directly fixed in an opening peripheral edge portion 213 to a partition wall 211 and a pump casing 12 may be used in place of the bellows 10. In this case, it is preferable that, when the bellows 210 is maximally contracted, a gap 217 is formed between a side surface portion 215(215A) which is included in the bellows 210, and which is closest to the opening peripheral edge portion 213, and the opening peripheral edge portion 213, thereby preventing the both portions from contacting with each other.

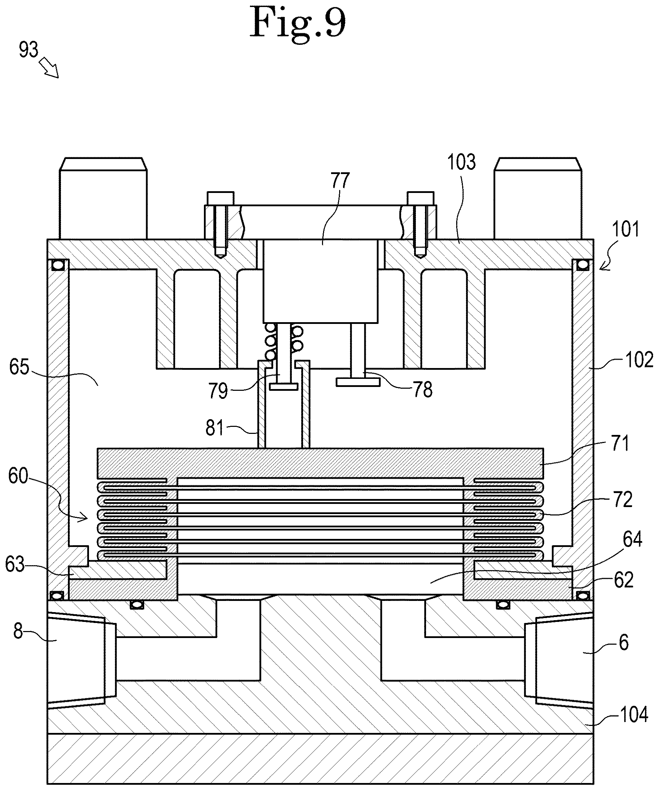

Fig. 9 is a side sectional view showing the whole of a pulsation damping device 93 which is a fluid apparatus of another embodiment of the invention. The portions corresponding to the places shown in Fig. 1 are denoted by the same reference numerals.

As shown in Fig. 9, the pulsation damping device 93 is substantially identical with the pulsation damping device 3 of the above-described embodiment. The pulsation damping device 93 includes a cylindrical peripheral wall member 102, and a casing 101 having an upper wall member 103 and lower wall member 104 which are fixed to the upper and lower ends of the peripheral wall member, respectively.

The bellows 60 which is configured so as to be extendable and contractible in the axial direction (the vertical direction) is placed in the casing 101.

Then, the opening peripheral edge portion 62 of the bellows 60 is fixed in an airtight state to a side wall portion of the lower wall member 104 by the annular fixing plate 63. Therefore, the internal space of the casing 101 is hermetically partitioned into the liquid chamber 64 which is located inside the bellows 60, and the air chamber 65 which is located outside the bellows 60. In the lower wall member 104, the suction flow passage 6 and ejection flow passage 8 for a fluid are formed, and the both passages 7, 8 communicate with the liquid chamber 64.

The automatic ventilation adjusting means 77 is disposed in the upper wall member 103.

The bellows 60 has a configuration which is substantially identical with that used in the pulsation damping device 3 shown in Fig. 1, and the configuration of the automatic ventilation adjusting means 77 is identical with that used in the pulsation damping device 3. Therefore, detailed description of their function operations is omitted.

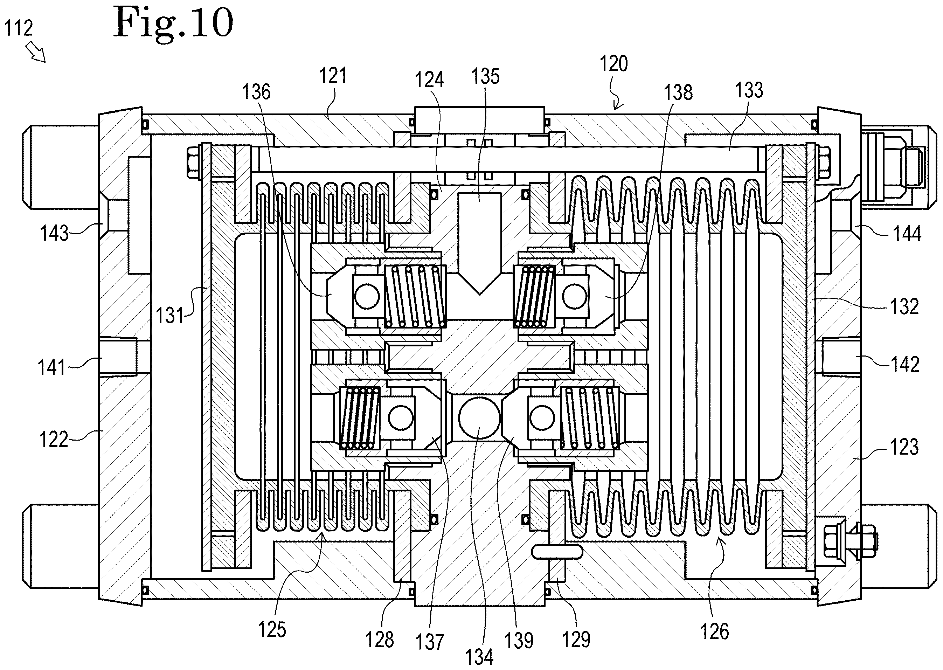

Fig. 10 is a longitudinal sectional view showing the whole of a bellows pump 112 which is a fluid apparatus of a further embodiment of the invention.

In the bellows pump 112, as shown in Fig. 10, a pair of right and left pump portions are symmetrically placed. The pump portions complementarily operate, and therefore a large transportation amount can be obtained.

Namely, the bellows pump 112 includes a cylindrical peripheral wall member 121, and a pump casing 120 having sidewall members 122, 123 which are fixed to the left and right ends of the peripheral wall member 121, respectively.

In the pump casing 120, a pair of bellows 125, 126 are placed in a bilaterally symmetrical manner across a partition wall 124.

The bellows 125, 126 have a configuration which is substantially identical with the bellows 10 used in the bellows pump 2 shown in Fig. 1. In the bellows 125, 126, their opening peripheral edge portions are fixed in an airtight state to side wall portions of the partition wall 124 by annular fixing plates 128, 129, and their closed end portions are coupled to pressure receiving plates 131, 132. The pressure receiving plates 131, 132 are coupled to each other by a plurality of coupling rods 133 which are passed through the partition wall 124.

In the partition wall 124, a suction flow passage 134 and ejection flow passage 135 for a fluid are formed. Between the suction flow passage 134 and the ejection flow passage 135, check valves 136, 137 which can be alternately opened and closed in accordance with extending and contracting operations of the bellows 125 are disposed, and check valves 138, 139 which can be alternately opened and closed in accordance with extending and contracting operations of the bellows 126 are disposed.

Furthermore, air holes 141, 142 for supplying pressurized air from a compressor or the like which is not shown, to the pump casing 120, and air holes 143, 144 for discharging the air in the pump casing 120 are formed in the sidewall members 122, 123 of the pump casing 120, respectively.

In the bellows pump 112, therefore, the pressurized air from the compressor or the like is alternately supplied from the air holes 141, 142 to cause the left and right bellows 125, 126 to alternately perform extending and contracting operations. When the fluid is sucked from the suction flow passage 134 through the check valve 139 by the right bellows 126, for example, the fluid stored in the left bellows 125 is ejected from the ejection flow passage 135 through the check valve 136 by the left bellows 125. When the fluid is sucked from the suction flow passage 134 through the check valve 137 by the left bellows 125, the fluid stored in the right bellows 126 is ejected from the ejection flow passage 135 through the check valve 138 by the right bellows 126.

When the left and right bellows 125, 126 are caused to alternately perform extending and contracting operations in this way, the suction of the fluid from the suction flow passage 134, and the ejection to the ejection flow passage 135 are repeated, whereby the predetermined pumping operation is executed.

### DESCRIPTION OF REFERENCE NUMERALS

1 pump device (fluid apparatus)
6 suction flow passage
7 intermediate flow passage (ejection flow passage or suction flow passage)
8 ejection flow passage
10 bellows
16 axis
17 peak portion
18 valley portion
19 side surface portion
33 peak portion
35 peak portion
60 bellows
67 peak portion
68 valley portion
69 side surface portion
93 pulsation damping device (fluid apparatus)
112 bellows pump (fluid apparatus)
125 bellows
126 bellows

## Claims

1. A fluid apparatus (1, 112) including a bellows (10) which is configured to be extendable and contractible in an axial direction in order to suck a fluid from a suction flow passage (6) and eject the fluid to an ejection flow passage (8), wherein
the bellows (10) comprises: peak portions (17) and valley portions (18) which are alternately formed in the axial direction; and annular side surface portions (19) which are located between the peak portions (17) and the valley portions (18), and which connect the both portions to each other,
a ratio B/A of a thickness B of the axial middle part of each of the peak portions (17) in a direction which is perpendicular to the axial direction, to a thickness A of each of the side surface portions (19) in the axial direction is set within a range of 1.3 to 1.8, and
**characterized in that**
the width C of a space portion formed between the side surface portions (19) which are adjacent to each other in the direction of the axis (16) of the bellows (10) is set to be equal to the thickness A of the side surface portions (19) when the bellows (10) is maximally contracted in the direction of the axis (16) of the bellows (10).

2. The fluid apparatus according to claim 1, wherein the ratio B/A of the thickness B of the axial middle part of each of the peak portions in the direction which is perpendicular to the axial direction, to the thickness A of each of the side surface portions in the axial direction is set within a range of 1.3 to 1.5.

3. The fluid apparatus according to claim 1 or 2, where-in, when the bellows is maximally contracted in the axial direction, each of side surface portions is located in a plane which is substantially perpendicular to the axial direction of the bellows.

## Patentansprüche

1. Fluidvorrichtung (1, 112) mit einem Balg (10), der in einer axialen Richtung dehnbar und zusammenziehbar ausgebildet ist, um ein Fluid aus einem Saugströmungskanal (6) zu saugen und das Fluid in einen Ausstoßströmungskanal (8) ausstoßen, wobei
der Balg (10) aufweist: Spitzenabschnitte (17) und Talabschnitte (18), die abwechselnd in der axialen Richtung gebildet sind; und ringförmige Seitenflächenabschnitte (19), die zwischen den Spitzenabschnitten (17) und den Talabschnitten (18) angeordnet sind und die beiden Abschnitte miteinander verbinden,
ein Verhältnis B/A einer Dicke B des axialen Mittelteils eines jeden der Spitzenabschnitte (17) in einer Richtung, die zu der axialen Richtung senkrecht ist, zu einer Dicke A eines jeden der Seitenflächenabschnitte (19) in der axialen Richtung in einem Bereich von 1,3 bis 1,8 eingestellt ist und
**dadurch gekennzeichnet, dass**
die Breite C eines Raumabschnitts, der zwischen den Seitenflächenabschnitten (19) gebildet ist, die in der Richtung derAchse (16) des Balgs (10) zueinander benachbart sind, gleich der Dicke A der Seitenflächenabschnitte (19) eingestellt ist, wenn der Balg (10) in der Richtung der Achse (16) des Balgs (10) maximal zusammengezogen ist.

2. Fluidvorrichtung gemäß Anspruch 1, wobei das Verhältnis B/A der Dicke B des axialen Mittelteils eines jeden der Spitzenabschnitte in der Richtung, die zu der axialen Richtung senkrecht ist, zu der Dicke A eines jeden der Seitenflächenabschnitte in der axialen Richtung in einem Bereich von 1,3 bis 1,5 eingestellt ist.

3. Fluidvorrichtung gemäß Anspruch 1 oder 2, wobei, wenn der Balg in der axialen Richtung maximal zusammengezogen ist, jeder der Seitenflächenabschnitte in einer Ebene angeordnet ist, die zu der axialen Richtung des Balgs im Wesentlichen senkrecht ist.

## Revendications

1. Appareil à fluide (1, 112) comprenant un soufflet (10) qui est configuré pour être extensible et contractile dans une direction axiale afin d'aspirer un fluide à partir d'un passage d'écoulement d'aspiration (6) et d'éjecter le fluide vers un passage d'écoulement d'éjection (8), dans lequel
le soufflet (10) comprend : des parties de crête (17) et des parties de creux (18) qui sont formées alternativement dans la direction axiale; et des parties de surface latérale annulaires (19) qui sont situées entre les parties de crête (17) et les parties de creux (18), et qui relient les deux parties entre elles,
un rapport B/A d'une épaisseur B de la partie centrale axiale de chacune des parties de crête (17) dans une direction qui est perpendiculaire à la direction axiale, à une épaisseur A de chacune des parties de surface latérale (19) dans la direction axiale est fixé dans une plage de 1,3 à 1,8, et
**caractérisé en ce que**
la largeur C d'une partie d'espace formée entre les parties de surface latérale (19) qui sont adjacentes les unes aux autres dans la direction de l'axe (16) du soufflet (10) est réglée pour être égale à l'épaisseur A des parties de surface latérale (19) lorsque le soufflet (10) est contracté au maximum dans la direction de l'axe (16) du soufflet (10).

2. Appareil à fluide selon la revendication 1, dans lequel le rapport B/A de l'épaisseur B de la partie centrale axiale de chacune des parties de crête dans la direction qui est perpendiculaire à la direction axiale, à l'épaisseur A de chacune des parties de surface latérale dans la direction axiale est fixé dans une plage de 1,3 à 1,5.

3. Appareil à fluide selon la revendication 1 ou 2, dans lequel, lorsque le soufflet est contracté au maximum dans la direction axiale, chacune des parties de surface latérale est située dans un plan qui est largement perpendiculaire à la direction axiale du soufflet.
